# EUROPÄISCHE PATENTSCHRIFT

(11) **EP 1 284 849 B1**
(45) Veröffentlichungstag und Bekanntmachung des Hinweises auf die Patenterteilung: **14.11.2007**
(21) Anmeldenummer: 01940326.0
(22) Anmeldetag: 12.04.2001
(51) Int. Cl.: B29C 45/53

(54) **SPRITZEINHEIT FÜR SPRITZGIESSMASCHINEN MIT KONTINUIERLICH ARBEITENDER PLASTIFIZIEREINHEIT**
INJECTION UNIT FOR INJECTION MOULDING MACHINES WITH A CONTINUOUSLY FUNCTIONING PLASTICIZING UNIT
UNITE D'INJECTION DESTINEE A DES DISPOSITIFS DE MOULAGE PAR INJECTION COMPORTANT UNE UNITE DE PLASTIFICATION FONCTIONNANT EN CONTINU

(30) Priorität: 14.04.2000 DE 10018542
(43) Veröffentlichungstag der Anmeldung: 26.02.2003
(73) Patentinhaber: Krauss Maffei GmbH, 80997 München (DE)
(72) Erfinder: ZIMMET, Rainer, 80804 München (DE)
(74) Vertreter: Wilhelm, Ludwig
(86) Internationale Anmeldenummer: PCT/EP2001/004249
(87) Internationale Veröffentlichungsnummer: WO 2001/078963

(56) Entgegenhaltungen:
- DE-B- 1 105 153
- FR-A- 1 339 308
- GB-A- 861 911
- GB-A- 1 172 707
- US-A- 3 020 591

## Beschreibung

Die Erfindung betrifft eine Spritzeinheit für Spritzgießmaschinen mit kontinuierlich arbeitender Plastifiziereinheit gemäß dem Oberbegriff der nebengeordneten Patentansprüche 1 und 5.

Im Gegensatz zu herkömmlichen Spritzgießmaschinen, bei der die Plastifizierung des Kunststoffgranulats und die Spritzdruckerzeugung durch eine mit einer Rückströmsperre ausgerüstete Schubschnecke bewerkstelligt wird, hat die Funktionsaufteilung auf eine Schneckenplastifiziereinheit einerseits und eine Kolbenspritzeinrichtung andererseits den Vorteil, dass eine Schneckenplastifiziereinhet mit optimalen Plaslifizierleistungen zum Einsatz gebracht werden kann. Außerdem hat die Verwendung mehrerer Kolbenspritzeinrichtungen, die von einer Schneckenplastifziereinheit gespeist werden, den Vorteil, dass die Schneckenplastifiziereinheit kontinuierlich betrieben werden kann, weil wechselweise die Schmelze den verschiedenen, in der Regel zwei, Kolbenspritzeinrichtungen zugeleitet wird. Der kontinuierliche Betrieb der Plastifiziereinheit bietet viele Vorteile. Zunächst wirkt er sich vorteilhaft auf die Homogenität der Schmelze aus. Außerdem erhöht sich die Plastifizierleistung, da die Stillstandszeit entfällt oder es kann für die gleiche Leistung eine kleinere Schnecke eingesetzt werden. Zudem wird der Verschleiß erheblich verringert, besonders bei großen Schnecken, da das stetige Wiederanfahren entfällt (Wegfall des adhäsiven Verschleisses beim Anfahren). Schließlich werden auch der Motor und das Getriebe weniger beansprucht, da sie gleichmäßiger belastet werden

Eine derartige Schneckenplastifiziereinheit mit nachgeschalteten Kolbenspritzeinrichtungen kann auch in besonders geeigneter Weise zum Einmischen vielfältiger Komponenten als Compounder genutzt werden. Da die Plastifizierschnecke im Gegensatz zu herkömmlichen Spritzgießmaschinen nicht vor- und zurückbewegt wird, können feste und flüssige Zuschlagstoffe immer an der gleichen Stelle (bezogen auf die Schnecke) zugegeben werden.

Bei der Herstellung von geschäumten Produkten erfolgt die Zugabe des Treibmittels ebenfalls immer an der gleichen Stelle. Der kontinuierliche Betrieb verhindert den unerwünschten Druckabbau des Treibmittels, wie dies bei herkömmlichen Spritzgießmaschinen in der Stillstandszeit der Fall ist.

Eine derartige Spritzgießmaschine mit einer gesonderten Plastifiziereinheit einerseits und mehreren Kolbenspritzeinrichtungen andererseits hat jedoch den Nachteil, dass die mehrfach vorhandenen Kolbenspritzeinrichtungen beträchtlichen Bauraum erfordern. Im weiteren müssen lange, zu beheizende Schmelzeleitungen mit entsprechenden Druckverlusten in Kauf genommen werden. Da außerdem die Plastifiziereinheit und die Kolbenspritzeinrichtungen übereinander oder nebeneinander liegen, kommt es durch die beheizten Schmelzeleitungen zu einer Wärmeausdehnung orthogonal zur Maschinenlängsachse. Die dabei auftretenden Längenänderungen der Schmelzeleitungen bereiten erhebliche Probleme. Ferner sind zum wechselweisen Befüllen der Kolbenspritzeinheiten Umsteuerventile notwendig. In der Regel sind auch ungünstige Spüleigenschaften gegeben, da die Zylinderräume der Kolbenspritzeinheiten nicht nach dem Prinzip eines kontinuierlich nur in einer Richtung verlaufenden Schmelzestromes (first in, first out) befüllt und entleert werden können. Ein Farbwechsel ist daher sehr aufwendig.

Eine Spritzgießmaschine mit gesonderter und kontinuierlich arbeitender Plastifiziereinheit und zwei Kolbenspritzeinrichtungen, aber mit unidirektionalem Schmelzefluss (first in, first out), ist aus der DE 195 05 984 A1 bekannt. Diese Druckschrift zeigt eine Spritzgießmaschine, bei der einer aus zwei gleichlaufenden Plastifizierschnecken bestehenden Schneckenplastifiziereinheit zwei Kolbeneinspritzeinrichtungen nachgeordnet sind, die, gesteuert über Umsteuerventile, wechselweise mit Schmelze befüllbar sind. Zur Erzielung eines unidirektionalen Schmelzestroms wird in der DE 195 05 984 A1 vorgeschlagen, bei jeder Kolbenspritzeinrichtung die Schmelze über teleskopisch verschiebbare Schmelzeleitungen in den jeweiligen Kolbenboden der Kolbenspritzeinrichtungen zu leiten, jedoch wird dadurch die Länge der Schmelzeleitung noch beträchtlich erhöht.

Aus der Druckschrift GB 1,172,707 ist eine Spritzeinheit mit sämtlichen Merkmalen der Oberbegriffe der nebengeordneten Patentansprüche 1 und 5 bekannt (GB 1,172,707, Seite 1, Zeilen 9 bis 25). In dieser Druckschrift wird als Spritzeinheit ein hohler Einspritzkolben mit einer darin befindlichen Plastifizierschnecke vorgeschlagen, wobei die Plastifizierschnecke in Richtung der Maschinenlängsachse ortsfest zu dem Einspritzkolben ist (GB 1,172,707, Seite 1, Zeilen 44, 46). Aufgrund fehlender Zwischenspeicher für die Schmelze (transfer chambers) besteht die Notwendigkeit, während der Einspritz- und Nachdruckphase die Rotation dei Plastifizierschnecke zu stoppen, was im Hinblick auf eine gute Plastifizierung als nachteilig angesehen wird (GB 1,172,707, Seite 1, Zeilen 32 bis 44). Zur Behebung dieses Nachteils wird in der GB 1,172,707 zunächst vorgeschlagen (GB 1,172,707, Seite 1, Zeilen 47 bis 72), die Plastifizierschnecke gegenüber dem Maschinenrahmen ortsfest anzuordnen, so daß bei der Vorwärtsbewegung des Einspritzkolbens vor der Plastifizierschnecke eine Reservekammer zur Aufnahme von Schmelze geschaffen wird, so daß die Plastifizierschnecke kontinuierlich betrieben werden kann und während der Einspritz- und Nachdruckphase diese Reservekammer mit Schmelze befüllt wird. Wenn der Einspritzkolben zurückgefahren wird, wird die Schmelze aus der Reservekammer ausgetrieben und gelangt über eine Rückströmsperre in den Einspritzraum vor dem Einspritzkolben. Diese Ausgestaltung besitzt gemäß der GB 1,172,707 den Nachteil GB 1.172,707, Seite 1, Zeile 82 bis Seite 2, Zeile 10), daß die Plastifizierschnecke nicht in der Lage ist, die beim Einspritzen aufgrund der schnellen Bewegung des Einspritzkolbens in kurzer Zeit gebildete Reservekammer mit Schmelze zu füllen. Daher kommt es in dieser Reservekammer zu einem plötzlichen Druckabfall und es bilden sich Blasen in der Schmelze, was Defekte in den spritzgegossenen Formteilen zur Folge hat. Zur Behebung dieses Nachteils wird in der GB 1,172,707 vorgeschlagen, daß die Plastifizierschnecke in dem Einspritzkolben längsverschieblich ist, so daß das Volumen der Reserverkammer vor der Plastifizierschnecke variabel ist und so geregelt werden kann, daß die Reservekammer konstant unter Druck gehalten wird und keine Blasenbildung erfolgen kann (GB 1,172,707,Seite 2, Zeilen 18 bis 38).

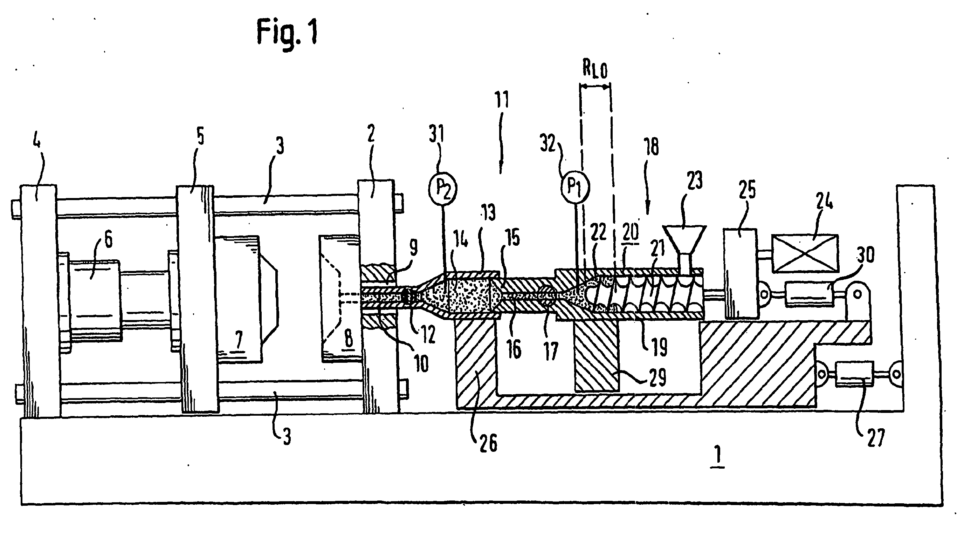

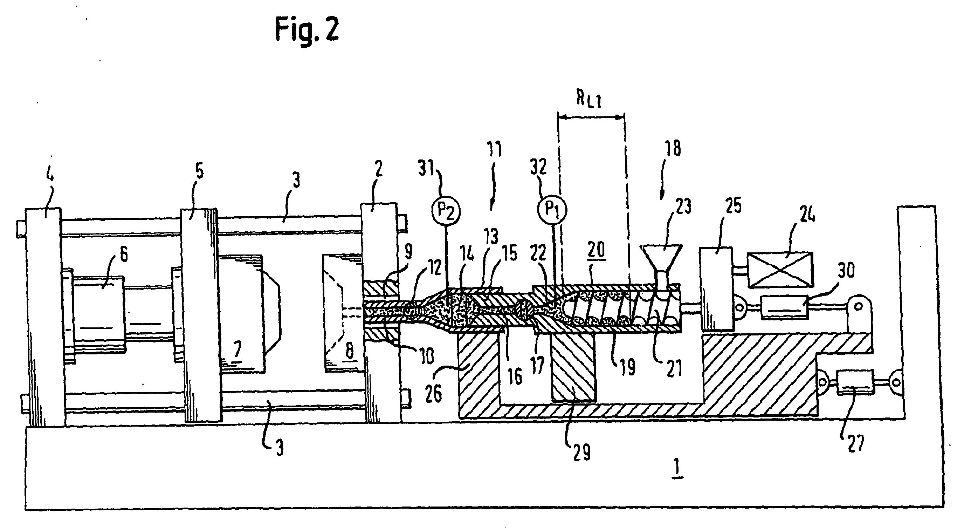

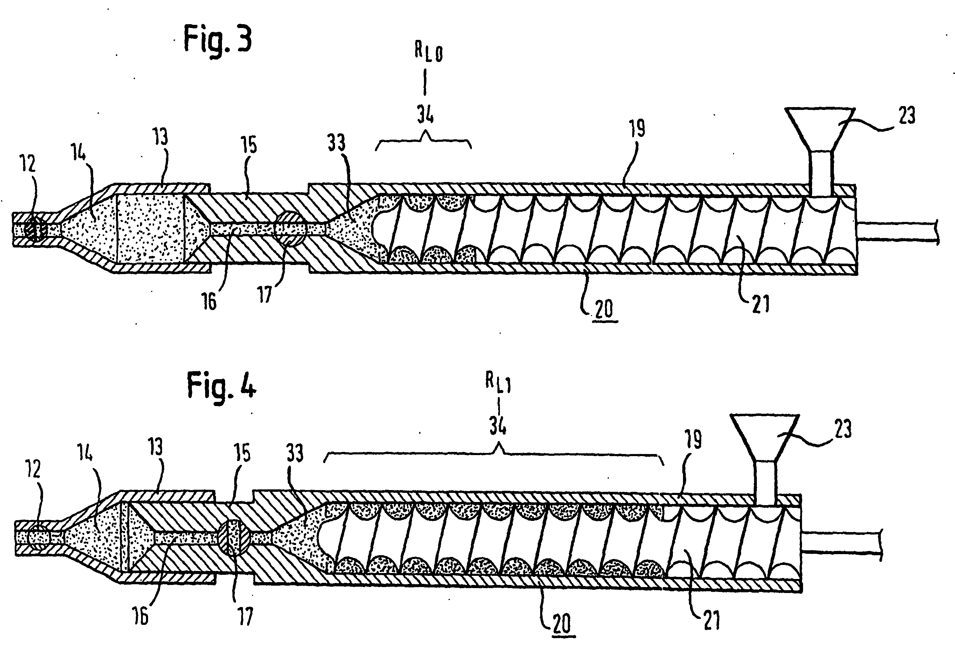

Aus der US 3,020,591 sind verschiedene Varianten einer Spritzeinheit bekannt, wobei jeweils ein hohler Einspritzkolben mit einer darin angeordneten und kontinuierlich betriebenen Plastifizierschnecke vorgesehen ist. Um die während der Einspritz- und Nachdruckphase geförderte Schmelze zwischenspeichern zu können, werden verschiedene Maßnahmen vorgeschlagen. In der Ausführungsform gemäß Figur 1 dieser Druckschrift kann die Plastifizierschnecke relativ zum Einspritzkolben in axialer Richtung verfahren werden, um in dem Schneckenvorraum einen Zwischenspeicher mit einem variablen Volumen bilden zu können. In der Ausführungsform von Figur 2 ist die Plastifizierschnecke in axialer Richtung ortsfest zum Einspritzkolben und weist in ihrem Inneren ein axiale Bohrung auf, in der ein Kolben reversierbar geführt ist und die als Zwischenspeicher dient. Bei der Ausführungsform von Figur 3 ist die Plastifizierschnecke ebenfalls ortsfest gegenüber über dem Schneckengehäuse; allerdings ist das Schneckengehäuse nicht als Einspritzkolben vorgesehen, sondern die Einheit aus Schneckengehäuse und Plastifizierschnecke ist ihrerseits in einem hohlen Einspritzkolben reversierbar geführt, so dass vor dem Schneckengehäuse ein Zwischenspeicher gebildet wird.

In der FR 1.339.308 ist eine weitere Spritzeinheit mit einer Kolbeneinspritzeinrichtung beschrieben, wobei die Kolbeneinspritzeinrichtung einen Einspritzkolben aufweist, der teleskopisch in einem eine Einspritzdüse tragenden Außengehäuse der Kolbeneinspritzeinrichtung verfahrbar gelagert ist, wobei der Raum vor dem Einspritzkolben einen Einspritzraum bildet, und wobei der Einspritzkolben an seinem vorderen Ende einen absperrbaren Schmelzedurchtrittskanal aufweist, über den der Einspritzraum mit Schmelze gespeist wird. Als Einspritzkolben und zum Plastifizieren dient ein Einschneckenextruder, wobei die Plastifizierschnecke in Maschinenlängsachse ortsfest gegenüber dem Schnecken- bzw. Extrudergehäuse ist. Zum Einspritzen wird der gesamte Einschneckenextruder nach vorne bewegt und verdrängt die im Einspritzraum befindliche Schmelze in eine Spritzgießform. Durch den sich dabei im Einspritzraum aufbauenden Druck wird ein Rückschlagventil am vorderen Ende des Extrudergehäuses geschlossen. Nach Beendigung des Einspritzvorgangs und mit Start des nächsten Dosiervorgangs wird durch die nachgeförderte Schmelze das Rückschlagventil geöffnet und Schmelze kann durch das Rückschlagventil hindurch in den Einspritzraum strömen. Fraglich ist, ob und falls ja mit welcher Drehzahl die Plastifizierschnecke während der Einspritz- und Nachdruckphase weiterbetrieben werden kann. Da das Volumen des Schneckenvorraums fest ist, kommt es bei einer kontinuierlichen Förderung von Schmelze zu einem nicht unerheblichen Druckanstieg im Schneckenvorraum. Sollte dieser Druck im Schneckenvorraum den Druck im Einspritzraum übersteigen, könnte sich das Rückschlagventil öffnen und Schmelze unkontrolliert in den Einspritzraum und von dort in die Spritzgießform gelangen. Um dieser Gefahr zu entgehen, müsste die Drehzahl der Plastifizierschnecke deutlich gesenkt werden und unter Umständen sogar gegen Null gehen. Nähere Einzelheiten zur Lösung dieser Problematik sind in dieser Druckschrift nicht enthalten, ganz im Gegensatz zu der aus der gleichen Zeit stammenden US 3,020,591, in der ganz konkret verschiedene Maßnahmen zur Behebung dieser Problematik vorgeschlagen worden sind.

Ausgehend hiervon liegt der Erfindung die Aufgabe zugrunde, eine Spritzeinheit für Spritzgießmaschinen anzugeben, bei der keine Relativbewegung zwischen der oder den Plastifizierschnecken und dem Schneckengehäuse vorgesehen ist und bei der gleichwohl ein kontinuierlicher Betrieb der Plastifizereinheit möglich ist.

Die Lösung dieser Aufgabe erfolgt durch Spritzeinheiten mit den Merkmalen der nebengeordneten Ansprüche 1 und 5. Die erfindungsgemäße Ausgestaltung der als Einspritzkolben dienenden Extruder gemäß den Kennzeichnenden Merkmalen der nebengeordneten Ansprüche 1 und 5 erlaubt es, daß sich bei geschlossenem Absperrventil die Rückstaulänge R_{L} nach hinten in den Extruder vergrößern kann. Der Extruder bietet selbst einen ausreichend großen Pufferbereich zum "Zwischenspeichern" von Schmelze während der Einspritz- und Nachdruckphase. Dies gilt insbesondere bei der Herstellung von dünnwandigen Formteilen, bei denen die Abkühlzeit relativ kurz ist, so daß der Extruder kontinuierlich weiterbetrieben werden kann und die Schmelze in dem Freiraum zwischen den Schnecken gepuffert werden kann. In einer einfachen Version kann gemäß Unteranspruch 2 ein herkömmlicher Doppelschneckenextruder mit zwei gleichsinnig drehenden Plastifizierschnecken vorgesehen werden, da bei diesem bauartbedingt zwischen den Schnecken genügend Freiraum vorhanden ist in dem sich die Schmelze aufstauen kann und sich somit die Rückstaulänge R_{L} problemlos nach hinten vergrößern kann.

Nachfolgend soll die Erfindung anhand eines Ausführungsbeispiels und unter Bezugnahme auf die Figuren 1 bis 4 näher erläutert werden. Es zeigen:
- Fig.1: Spritzgießmaschine mit zurückgefahrener Einspritzeinheit (Situation vor Einspritzen);
- Fig.2: Spritzgießmaschine mit vorgefahrener Einspritzeinheit (Situation nach Einspritzen);
- Fig.3: schematische Darstellung der Spritzeinheit in der Situation von Fig.1;
- Fig.4: schematische Darstellung der Spritzeinheit in der Situation von Fig.2.

Die Figuren 1 und 2 zeigen eine Spritzgießmaschine mit einem Maschinenrahmen 1, auf dem eine feste Formaufspannplatte 2 befestigt ist, die über Zug- und Führungsholme 3 mit einer Abstützplatte 4 verbunden ist. Die Zug- und Führungsholme 3 durchsetzen eine bewegliche Formaufspannplatte 5, die verschieblich auf dem Maschinenrahmen 1 abgestützt ist. Zwischen der Abstützplatte 4 und der beweglichen Formaufspannplatte 5 befindet sich die Schließhydraulik 6. Die feste und die bewegliche Formaufspannplatte 2 und 5 tragen jeweils eine Werkzeughälfte 7 und 8. Auf der den Werkzeughälften 7,8 abgewandten Seite der festen Formaufspannplatte 2 befindet sich eine Öffnung 9 zum Einführen und Ansetzen einer Einspritzdüse 10 einer Kolbeneinspritzeinheit 11.

Die Kolbeneinspritzeinheit 11 besteht aus einem die Einspritzdüse 10 und ein Absperrventil 12 tragenden Außengehäuse 13, das einen die einzuspritzende Schmelze aufnehmenden Einspritzraum 14 umschließt und in dem der Einspritzkolben 15 teleskopisch verfahrbar ist. Im Innern des Einspritzkolbens 15 ist ein Schmelzedurchtrittskanal 16 vorgesehen, der mit einem aktiv schaltbaren Absperrventil 17 geschlossen und freigegeben werden kann. Der Schmelzedurchtrittskanal 16 verbindet den Einspritzraum 14 mit einem der Plastifiziereinheit 18 zugewandten hohlrylindrischen Abschnitt 19 des Einspritzkolbens 15, in dem zwei gleichsinnig drehende Plastifizierschnecken nach Art eines Doppelschneckextruders angeordnet und ortsfest gegenüber dem das Schneckengehäuse 20 bildenden Abschnitt 19 sind. Im hinteren Bereich des Schneckengehäuses 20 befindet sich ein Fülltrichter 23, der Drehantrieb 24 für die zwei Plastifizierschnecken 21 sowie ein Getriebe 25. Die zum Einspritzraum 14 weisende Fläche des Einspritzkolbens 15 sowie der Schneckenvorraum 22 sind vorzugsweise konkav ausgebildet, wie dies aus Figur 1 ersichtlich ist, um das Spülen der Spritzgießmaschine bei Material- oder Farbwechsel zu erleichtern.

Das Außengehäuse 13 ist auf einem Gestell 26 befestigt, das verschiebbar auf dem Maschinenrahmen 1 abgestützt ist und mittels einer ersten hydraulischen Stelleinrichtung 27 an die feste Formaufspannplatte 2 herangefahren und von dieser wegbewegt werden kann. Der Einspritzkolben 15 kann zur Abstützung und zur Führung auf dem Gestell 26 gegebenenfalls mit einem Unterteil 29 versehen sein. Mittels einer zweiten hydraulischen Stelleinrichtung 30 kann die gesamte Plastifiziereinheit 18 in dem Aussengehäuse 13 teleskopisch verfahren werden. Schließlich sind für den Einspritzraum 14 und den Schneckenvorraum 22 jeweils Druckaufnehmer 31 und 32 sowie gegebenenfalls Temperatursensoren vorgesehen.

Während des Betriebs der Spritzgießmaschine wird die Plastifiziereinheit 18 kontinuierlich betrieben und der Einspritzraum 14 bei geöffnetem Absperrventil 17 mit Schmelze gespeist. Figur 1 und Figur 3 zeigen die Situation vor dem Einspritzen, bei zurückgefahrenem Einspritzkolben 15 bzw. zurückgefahrenem Doppelschneckenextruder 20,21 und mit einer Ausgangs-Rückstaulänge R_{L0} (siehe auch Ziffer 34 in Figur 3). Im nächsten Schritt wird das Absperrventil 17 im Schmelzedurchtrittskanal 16 geschlossen, wie dies in Figur 4 dargestellt ist, das Absperrventil 12 vor der Einspritzdüse 10 geöffnet und mittels der hydraulischen Stelleinrichtung 28 der Spritzhub des Einspritzkolbens 15 eingeleitet, um das geschlossene Werkzeug 7,8 mit Schmelze zu befüllen.

Die Figuren 2 und 4 zeigen die Situation am Ende des Spritzhubs. Der Einspritzkolben 15 bzw. der Doppelschneckenextruder 20,21 befindet sich in dem Außengehäuse 13 in seiner vordersten Stellung und der Einspritzraum 14 besitzt sein Minimalvolumen.

Im nächsten Schritt wird das Absperrventil 12 vor der Einspritzdüse 10 geschlossen, das Absperrventil 17 im Schmelzedurchtrittskanal 16 geöffnet und der Einspritzkolben 15 bzw. der Doppelschneckenextruder 20, 21 wird nach hinten verfahren.

Da die Plastifizierschnecke ununterbrochen rotiert und Material über den Fülltrichter 23 zugeführt wird, wird andauernd Schmelze erzeugt. Vorliegend kann auch während des Spritzhubs und während der Verweilzeit des Spritzlings in der Form die Plastifiziereinheit weiterbetrieben werden, denn in dieser Zeit kann sich bei geschlossenem Absperrventil 17 in dem Doppelschneckenextruder 20. 21 der sich im Schneckenvorraum 33 aufbauende Druck P1 nach hinten fortsetzen und in den Schneckengängen wird nach und nach ein Füllgrad von 1 erzeugt. Die Rückstaulänge R_{L} vergrößert sich auf einen Wert R_{L1}. Der kontinuierliche Betrieb der Plastifiziereinheit ist insbesondere bei dünnwandigen Formteilen bzw kurzen Zykluszeiten gewährleistet, da für einen übermäßigen Druckaufbau P1 in dem Schneckenvorraum 33 nicht genügend Zeit verbleibt und in der kurzen Zeit Schmelze in dem Bereich 34 gepuffert werden kann, wie dies aus der Figur 4 ersichtlich ist. Die Schmelze wird durch den sich zwischen den Spritzhuben rückwärts bewegenden Einspritzkolben 15 rasch durch den vorzugsweise kurz gehaltenen Schmelzdurchtrittskanal 16 aus dem Schneckenvorraum 33 und dem Bereich 34 der Plastifizierschnecken abgeführt. Bei einem Doppelschneckenextruder mit zwei gleichsinnig drehenden Plastifizierschnecken bleibt zwischen den Plastifizierschnecken genügend Freiraum (keine geschlossenen Schneckengänge), der eine ausreichende Vergrößerung der Rückstaulänge R_{L} erlaubt und somit einen ausreichend großen Pufferbereich 34 bildet. Dabei nimmt der sich im Schneckenvorraum 33 aufbauende Druck P1 in der Regel linear von dem Schneckenvorraum 33 nach hinten in den Freiraum zwischen den Plastifizierschnecken ab. Anstelle des hier beschriebenen Doppelschneckenextruders mit gleichsinnig drehenden Plastifizierschnecken können auch andere Bauarten verwendet werden, wie sie mit den Merkmalen der Unteransprüche 3, 4 und 5 charakterisiert sind. Die Verwendung eines aktiv schaltbaren Absperrventils (17) bietet sich bei der Verarbeitung von mit Lang- und Naturfasern versetzten Schmelzen an, da bei üblichen Rückströmsperren aufgrund des Durchströmens von schmalen und gewundenen Fließkanälen mit der Gefahr von Beschädigungen der Fasern gerechnet werden müsste.

### Bezugszeichenliste

- 1: Maschinenrahmen
- 2: Feste Formaufspannplatte
- 3: Zug- und Führungsholme
- 4: Abstützplatte
- 5: Bewegliche Formaufspannplatte
- 6: Schließhydraulik
- 7: Werkzeughälfte
- 8: Werkzeughälfte
- 9: Öffnung
- 10: Einspritzdüse
- 11: Kolbeneinspritzeinheit
- 12: Erstes Absperrventil
- 13: Außengehäuse
- 14: Einspritzraum
- 15: Einspritzkolben
- 16: Schmelzedurchtrittskanal
- 17: Zweites Absperrventil
- 18: Plastifiziereinheit
- 19: hohlzylindrischer hinterer Teil des Einspritzkolbens
- 20: Schneckenzylinder
- 21: Plastifizierschnecke
- 22: Schmelzevorratsraum
- 23: Fülltrichter
- 24: Drehantrieb
- 25: Getriebe
- 26: Gestell
- 27: Erste hydraulische Stelleinrichtung
- 28: Nicht besetzt
- 29: Unterteil
- 30: Zweite hydraulische Stelleinrichtung
- 31: Druckaufnehmer im Einspritzraum
- 32: Druckaufnehmer im Schmelzevorratsraum
- 33: Schneckenvorraum
- 34: Pufferbereich mit Füllgrad 1

## Patentansprüche

1. Spritzeinheit für Spritzgießmaschinen mit einer Plastifiziereinheit, mit einer über eine Einspritzdüse (10) mit der Spritzgießmaschine koppelbaren, Kolbeneinspritzeinrichtung (11), wobei die Kolbeneinspritzeinrichtung (11) einen Einspritzkolben (15) aufweist, der teleskopisch in einem die Einspritzdüse (10) tragenden Außengehäuse (13) der Kolbeneinspritzeinrichtung (11) verfahrbar gelagert ist, wobei der Raum vor dem Einspritzkolben (15) einen Einspritzraum (14) bildet, wobei der Einspritzkolben (15) an seinem vorderen Ende einen absperrbaren Schmelzedurchtrittskanal (16) aufweist, über den der Einspritzraum (14) mit Schmelze gespeist wird, **dadurch gekennzeichnet, daß** als Einspritzkolben (15) und zum Plastifizieren ein kontinuierlich betreibbarer Extruder (18) mit mehreren Plastifizierschnecken (21) vorgesehen ist, wobei die Plastifizierschnecken (21) in Richtung der Maschinenlängsachse ortsfest gegenüber dem Schnecken- bzw. Extrudergehäuse sind, und wobei der Extruder (18) derart gestaltet ist, daß zwischen den Plastifizierschnecken (21) Freiraum vorhanden ist, so dass bei geschlossenem Absperrventil (17) Schmelze Ober eine Rückstaulänge R_{L} nach hinten in den Extruder gepuffert werden kann.

2. Spritzeinheit nach Anspruch 1, **dadurch gekennzeichnet, daß** ein Doppelschneckenextruder mit zwei gleichsinnig drehenden Plastifizierschnecken vorgesehen ist.

3. Spritzeinheit nach Anspruch 1, **dadurch gekennzeichnet, daß** ein Doppelschneckenextruder mit zwei gegensinnig drehenden Plastifizierschnecken vorgesehen ist und daß im Bereich der Rückstaulänge R_{L} der Schneckenaussendurchmesser der Plastifizierschnecken einen reduzierten Durchmesser aufweist und/oder der Zylinderdurchmesser des Extruder- bzw. Schneckengehäuses vergrößert ist und/oder Durchbrüche in den Schneckenstegen vorgesehen sind.

4. Spritzeinheit nach Anspruch 1, **dadurch gekennzeichnet, daß** ein Doppelschneckenextruder mit tangierenden, d.h. nicht kämmenden, Plastifizierschnecken vorgesehen ist.

5. Spritzeinheit für Spritzgießmaschinen mit einer Plastifiziereinheit, mit einer Ober eine Einspritzdüse (10) mit der Spritzgießmaschine koppelbaren. Kolbeneinspritzeinrichtung (11), wobei die Kolbeneinspritzeinrichtung (11) einen Einspritzkolben (15) aufweist, der teleskopisch in einem die Einspritzdüse (10) tragenden Außengehäuse (13) der Kolbeneinspritzeinrichtung (11) verfahrbar gelagert ist, wobei der Raum vor dem Einspritzkolben (15) einen Einspritzraum (14) bildet, wobei der Einspritzkolben (15) an seinem vorderen Ende einen absperrbaren Schmelzedurchtrittskanal (16) aufweist, über den der Einspritzraum (14) mit Schmelze gespeist wird, **dadurch gekennzeichnet, daß** als Einspritzkolben (15) und zum Plastifizieren ein kontinuierlich betreibbarer Einschneckenextruder (18) vorgesehen ist, wobei die Plastifizierschnecke (21) in Richtung der Maschinenlängsachse ortsfest gegenüber dem Schnecken- bzw. Extrudergehäuse ist, und dass im Bereich einer Rückstaulänge R_{L} der Schneckenaussendurchmesser der Plastifizierschnecke einen reduzierten Durchmesser aufweist und/oder der Zylinderdurchmesser des Schnecken- bzw. Extrudergehäuses vergrößert ist und/oder Durchbrüche in den Schneckenstegen vorgesehen sind, so dass bei geschlossenem Absperrventil (17) Schmelze über die Rückstaulänge R_{L} nach hinten in den Extruder gepuffert werden kann.

6. Spritzeinheit nach einem der Ansprüche 1 bis 5, **dadurch gekennzeichnet, daß** der Einspritzkolben (15) zweistückig ausgebildet ist, dergestalt, daß als hinteres Stück der Extruder und als vorderes Stück ein mit diesem Extruder verbindbares und in dem Aussengehäuse (13) verschiebbares Übergangsstück vorgesehen sind.

7. Spritzeinheit nach einem der Ansprüche 1 bis 5, **dadurch gekennzeichnet, daß** der Einspritzkolben einstückig ausgebildet ist, dergestalt, daß das vordere Teil In dem Aussengehäuse (13) verschiebbar ist und daß das hintere Teil als Extrudergehäuse zur Aufnahme der Pfastifizierschnecken ausgebildet ist.

8. Spritzeinheit nach einem der Ansprüche 1 bis 7, **dadurch gekennzeichnet, daß** in dem Schmelzedurchtrittskanal ein aktiv schaltbares Absperrventil vorgesehen ist.

9. Verfahren zum Betreiben einer Spritzgießmaschine mit einer Spritzeinheit nach einem der Ansprüche 1 bis 8, **dadurch gekennzeichnet, daß** der Extruder kontinuierlich betrieben wird.

10. Verfahren nach Anspruch 9, **dadurch gekennzeichnet, daß** während der Einspritz- und/oder der Nachdruckphase der Schmelzekanal abgesperrt wird.

11. Verfahren nach Anspruch 9 oder 10, **dadurch gekennzeichnet, daß** der Drehantrieb für die Plastifizierschnecken während der Einspritz- und/oder während der Nachdruckphase mit reduzierter Plastifizierdrehzahl weiterbetrieben wird.

## Claims

1. An injection unit for injection moulding machines comprising a plasticizing unit, comprising a plunger injection device (11) which can be coupled to the injection moulding machine via an injection nozzle (10), wherein the plunger injection device (11) has an injection plunger (15) which is mounted so that it can be moved in a telescopic manner in an outer housing (13) of the plunger injection device (11) bearing the injection nozzle (10), wherein the space in front of the injection plunger (15) forms an injection space (14), wherein at its front end the injection plunger (15) has a melt passageway (16) which can be shut off, via which the injection space (14) is supplied with melt, **characterised in that** a continuously operable extruder (18) having a plurality of plasticizing screws (21) is provided as the injection plunger (15) and for plastification, wherein the plasticizing screws (21) are fixed with respect to the screw or extruder housing in the direction of the longitudinal axis of the machine, and wherein the extruder (18) is configured in such a manner that free space is provided between the plasticizing screws (21) so that when the stop valve (17) is closed, melt can be buffered backwards into the extruder via a back draft length R_{L}.

2. The injection unit according to claim 1, **characterised in that** a double-screw extruder is provided with two plasticizing screws rotating in the same direction.

3. The injection unit according to claim 1, **characterised in that** a double-screw extruder is provided with two plasticizing screws rotating in opposite directions and that in the area of the back draft length R_{L}, the screw outside diameter of the plasticizing screws has a reduced diameter and/or the cylinder diameter of the extruder or screw housing is enlarged and/or openings are provided in the screw lands.

4. The injection unit according to claim 1, **characterised in that** a double-screw extruder is provided with tangent, i.e., non-engaging plasticizing screws.

5. An injection unit for injection moulding machines comprising a plasticizing unit, comprising a plunger injection device (11) which can be coupled to the injection moulding machine via an injection nozzle (10), wherein the plunger injection device (11) has an injection plunger (15) which is mounted so that it can be moved in a telescopic manner in an outer housing (13) of the plunger injection device (11) bearing the injection nozzle (10), wherein the space in front of the injection plunger (15) forms an injection space (14), wherein at its front end the injection plunger (15) has a melt passageway (16) which can be shut off, via which the injection space (14) is supplied with melt, **characterised in that** a continuously operable single-screw extruder (18) is provided as the injection plunger (15), wherein the plasticizing screw (21) is fixed with respect to the screw or extruder housing in the direction of the longitudinal axis of the machine, and for plastification, and that in the area of the back draft length R_{L} the screw outside diameter of the plasticizing screw has a reduced diameter and/or the cylinder diameter of the extruder or screw housing is enlarged and/or openings are provided in the screw lands so that when the stop valve (17) is closed, melt can be buffered backwards into the extruder via a back draft length R_{L}.

6. The injection unit according to any one of claims 1 to 5, **characterised in that** the injection plunger (15) is formed as two-part in such a manner that the extruder is provided as the rear portion and a transition piece which can be connected to this extruder and which can be displaced in the outer housing (13) are provided as the front portion.

7. The injection unit according to any one of claims 1 to 5, **characterised in that** the injection plunger is formed in one piece in such a manner that the front part can be displaced in the outer housing (13) and the rear part is formed as an extruder housing for receiving the plasticizing screws.

8. The injection unit according to any one of claims 1 to 7, **characterised in that** an actively switchable stop valve is provided in the melt passageway.

9. A method for operating an injection moulding machine comprising an injection unit according to any one of claims 1 to 8, **characterised in that** the extruder is operated continuously.

10. The method according to claim 9, **characterised in that** the melt channel is shut off during the injection and holding pressure stage.

11. The method according to claim 9 or 10, **characterised in that** during the injection and/or during the holding pressure stage the rotary drive for the plasticizing screws is operated further at reduced plasticizing speed.

## Revendications

1. Unité d'injection pour machines de moulage par injection comportant une unité de plastification, comprenant un dispositif d'injection à piston (11) pouvant être couplé par une buse d'injection (10) à la machine de moulage par injection, ce dispositif d'injection à piston (11) présentant un piston d'injection (15) qui s'appuie de manière télescopique et mobile dans une enceinte extérieure (13) supportant la buse d'injection (10) du dispositif d'injection à piston (11), sachant que l'espace en amont du piston d'injection (15) constitue une chambre d'injection (14), le piston d'injection (15) comportant à son extrémité avant un canal de passage de coulée pouvant être fermé (16) par lequel la chambre d'injection (14) est alimentée en coulée, **caractérisée en ce qu'**il est prévu comme piston d'injection (15) et pour la plastification une extrudeuse (18) pouvant fonctionner en continu et équipée de plusieurs vis de plastification (21), les vis de plastification (21) étant fixes dans le sens de l'axe longitudinal de la machine par rapport à l'enceinte de la vis ou de l'extrudeuse et l'extrudeuse (18) étant conçue de manière à ce qu'il y ait entre les vis de plastification (21) de l'espace libre, de sorte que, lorsque la soupape d'arrêt (17) est fermée, de la coulée peut être tamponnée vers l'arrière dans l'extrudeuse sur une longueur de reflux R_{L}.

2. Unité d'injection selon la revendication 1, **caractérisée en ce qu'**il est prévu une extrudeuse à double vis comportant deux vis de plastification tournant dans le même sens.

3. Unité d'injection selon la revendication 1, **caractérisée en ce qu'**il est prévu une extrudeuse à double vis comportant deux vis de plastification tournant en sens inverse et qu'au niveau de la longueur de reflux R_{L}, le diamètre extérieur de vis des vis de plastification présente un diamètre réduit et/ou que le diamètre de cylindre de l'enceinte d'extrudeuse ou de vis est agrandi et/ou que des percées sont prévues dans les traverses des vis.

4. Unité d'injection selon la revendication 1, **caractérisée en ce qu'**il est prévu une extrudeuse à double vis comportant des vis de plastification tangentes, c'est-à-dire non empeignées.

5. Unité d'injection pour machines de moulage par injection comportant une unité de plastification, comprenant un dispositif d'injection à piston (11) pouvant être couplé par une buse d'injection (10) à la machine de moulage par injection, ce dispositif d'injection à piston (11) présentant un piston d'injection (15) qui s'appuie de manière télescopique et mobile dans une enceinte extérieure (13) supportant la buse d'injection (10) du dispositif d'injection à piston (11), sachant que l'espace en amont du piston d'injection (15) constitue une chambre d'injection (14), le piston d'injection (15) comportant à son extrémité avant un canal de passage de coulée pouvant être fermé (16) par lequel la chambre d'injection (14) est alimentée en coulée, **caractérisée en ce qu'**il est prévu comme piston d'injection (15) et pour la plastification une extrudeuse (18) pouvant fonctionner en continu et équipée de plusieurs vis de plastification (21), les vis de plastification (21) étant fixes dans le sens de l'axe longitudinal de la machine par rapport à l'enceinte de la vis ou de l'extrudeuse, et qu'au niveau de la longueur de reflux R_{L}, le diamètre extérieur de vis de la vis de plastification présente un diamètre réduit et/ou que le diamètre de cylindre de l'enceinte d'extrudeuse ou de vis est agrandi et/ou que des percées sont prévues dans les traverses des vis, de sorte que, lorsque la soupape d'arrêt (17) est fermée, de la coulée peut être tamponnée vers l'arrière dans l'extrudeuse sur la longueur de reflux R_{L}.

6. Unité d'injection selon une des revendications 1 à 5, **caractérisée en ce que** le piston d'injection (15) est réalisé en deux pièces de manière à ce qu'il soit prévu comme pièce arrière de l'extrudeuse et comme pièce avant une pièce de transition pouvant être reliée à cette extrudeuse et pouvant être déplacée dans l'enceinte extérieure (13).

7. Unité d'injection selon une des revendications 1 à 5, **caractérisée en ce que** le piston d'injection (15) est réalisé en une pièce de manière à ce que la pièce avant puisse être déplacée dans l'enceinte extérieure (13) et que la pièce arrière soit réalisée sous forme d'une enceinte d'extrudeuse destinée à recevoir les vis de plastification.

8. Unité d'injection selon une des revendications 1 à 7, **caractérisée en ce qu'**il est prévu dans le canal de passage de coulée une soupape d'arrêt pouvant être mise en activation.

9. Procédé d'utilisation d'une machine de moulage par injection comportant une unité d'injection selon une des revendications 1 à 8, **caractérisée en ce que** l'extrudeuse fonctionne en continu.

10. Procédé selon la revendication 9, **caractérisée en ce que**, pendant la phase d'injection et/ou la phase compression finale, le canal de coulée est barré.

11. Procédé selon la revendication 9 ou 10, **caractérisée en ce que** la commande rotative pour les vis de plastification continue à fonctionner pendant la phase d'injection et/ou pendant la phase de compression finale avec un régime de plastification réduit.
